# EUROPEAN PATENT APPLICATION

(11) **EP 4 497 714 A1**
(43) Date of publication of application: **29.01.2025**
(21) Application number: 24189963.2
(22) Date of filing: 22.07.2024
(51) Int. Cl.: B65H 57/14, B65H 57/24, B65H 59/36, B65H 75/44

(54) **WIRE TRANSFER DEVICE**

(30) Priority: 25.07.2023 KR 20230096915
(71) Applicant: SK On Co., Ltd., Seoul 03161 (KR); Mirae Solution Technology Co., Ltd., Daejeon 34364 (KR)
(72) Inventor: LEE, Jeong Bok, 34124 Daejeon (KR); KIM, Sang Hwa, 34124 Daejeon (KR); LIM, Kyun Yeol, 34124 Daejeon (KR); MIN, Kyoung Tae, 34125 Daejeon (KR)
(74) Representative: Bird & Bird LLP

(57) **Abstract**

A wire transfer device (10) is provided. The wire transfer device (10) includes a frame (100), a bobbin (200) connected to the frame (100) and on which a wire (11) is configured to be wound; a holder (700) including a first end (701) connected to the wire (11) and a second end (702) opposite to the first end and configured to be connected to foil (21); and a guide roller (600) configured to guide a movement path of the wire (11) or the holder (700). The guide roller (600) includes a groove region (602) for accommodating the wire (11) and a protruding region (601) extending from the groove region (602) and configured to contact with the holder (700).

## Description

### BACKGROUND

### 1. FIELD

The present disclosure relates to a wire transfer device.

### 2. DESCRIPTION OF RELATED ART

Unlike a primary battery, a secondary battery may be charged and discharged, and thus may be applied to devices within various fields such as a digital camera, a mobile phone, a laptop personal computer (PC), a hybrid vehicle, an electric vehicle, and an energy storage system (ESS). The secondary battery may be a lithium-ion battery, a nickelcadmium battery, a nickel-metal hydride battery, or a nickel-hydrogen battery.

The secondary battery may be manufactured by a flexible pouch-type battery cell or a rigid prismatic or cylindrical can-type battery cell. The plurality of battery cells may be formed as a stacked cell assembly. The cell assembly may be disposed in a module housing to form a battery module, and the plurality of battery modules may be disposed in a pack housing to form a battery pack. The battery cell may include foil and electrodes coated on the foil.

The foil may be used to form the anode or cathode of the battery cell. The foil may be transferred from a rolled state to an unfolded state for coating each electrode. However, during a foil transfer process, the foil may be broken due to an external impact or a tension applied to the foil. When the foil is broken, an operator may manually move the broken foil to restart an operation. However, when the operator manually moves the foil, the tension delivered to the foil may not be uniform, based on the operator's level of skill. In addition, heat occurring in a foil transfer device may cause a safety accident to the operator.

### SUMMARY

An aspect of the present disclosure may provide a wire transfer device which may provide appropriate tension to foil.

Another aspect of the present disclosure may provide a wire transfer device which may prevent a safety accident and increase work convenience.

A battery cell manufactured using the wire transfer device in the present disclosure may be widely applied to devices within the green technology field, such as an electric vehicle, a battery charging station, or solar or wind power generation using battery storage. In addition, a battery cell manufactured using the wire transfer device in the present disclosure may suppress air pollution and greenhouse gas emissions to thus be used in an eco-friendly electric vehicle, a hybrid vehicle or the like for mitigating the effects of climate change.

According to an aspect of the present disclosure, a wire transfer device may include: a frame; a bobbin connected to the frame and on which a wire is configured to be wound; a holder including a first end connected to the wire and a second end opposite to the first end and configrued to be connected to foil; and a guide roller configured to guide a movement path of the wire or the holder, wherein the guide roller includes a groove region for accommodating the wire and a protruding region extending from the groove region and configured to contact with the holder.

The protruding region may include a plurality of protrusions respectively having a curved surface surrounding at least a portion of the holder.

The guide roller may include a first guide roller, a second guide roller, and a third guide roller spaced apart from one another, and a second virtual line passing through a center of the first guide roller and a center of the third guide roller may be inclined at a specified angle with respect to a first virtual line passing through the center of the first guide roller and a center of the second guide roller.

The specified angle may be 20 to 25 degrees.

The device may further include a driving device including a motor configured to supply driving force for rotating the bobbin.

The driving device may include at least one pulley configured to rotate by the driving force generated by the motor, and a chain connected to the at least one pulley and the bobbin, and the frame may include a chain drive frame supporting the at least one pulley.

The device may further include a limit sensor configured to detect a movement of the wire, wherein the motor is configured to operate based on information detected by the limit sensor.

The device may further include a tension adjustment unit configured to adjust tension of the wire, wherein the tension adjustment unit includes a tension adjustment rack configured to move by the tension of the wire in a first direction, a tension adjustment device configured to prevent the movement of the tension adjustment rack in the first direction, and a gas lift for increasing the tension of the wire.

The device may further include an encoder module including an encoder bracket connected to a linear shaft of the tension adjustment unit, an encoder roller connected to the encoder bracket and configured to guide a movement of the wire, and an encoder configured to detect a rotation speed of the encoder roller.

The tension adjustment unit is connected to the frame, and the tension adjustment unit includes a screw structure for moving the tension adjustment device in a second direction perpendicular to the first direction.

The bobbin may include an accommodation region for accommodating the wire, and a bobbin drive shaft extending from the accommodation region and rotatably connected to the frame.

The device may further include a brake connected to the bobbin drive shaft.

The frame and the guide roller may be configured to be mounted on a foil transfer device while being spaced apart from each other.

The guide roller may include a ceramic.

The guide roller may include a first roller module disposed outside a structure of the foil transfer device and a second roller module disposed inside the structure of the foil transfer device.

### BRIEF DESCRIPTION OF DRAWINGS

The above and other aspects, features, and advantages of the present disclosure will be more clearly understood from the following detailed description taken in conjunction with the accompanying drawings, in which:
FIG. 1 is a perspective view of a wire transfer device according to an exemplary embodiment;
FIG. 2A is a side view of the wire transfer device according to an exemplary embodiment;
FIG. 2B is a top view of the wire transfer device according to an exemplary embodiment;
FIG. 2C is a front view of the wire transfer device according to an exemplary embodiment;
FIG. 3 is a view of the wire transfer device mounted on a foil transfer device according to an exemplary embodiment;
FIG. 4 is an enlarged view of region A of FIG. 3 according to an exemplary embodiment;
FIG. 5 is an enlarged view of region B of FIG. 3 according to an exemplary embodiment;
FIG. 6 is an enlarged view of region C of FIG. 4 according to an exemplary embodiment;
FIGS. 7A and 7B are views of a guide roller according to an exemplary embodiment;
FIGS. 8A and 8B are views of a guide roller according to another exemplary embodiment;
FIGS. 9A and 9B are views of a guide roller according to another exemplary embodiment;
FIG. 10 is a front view of the guide roller mounted on the foil transfer device according to an exemplary embodiment; and
FIG. 11 is a perspective view of the guide roller according to an exemplary embodiment.

### DETAILED DESCRIPTION

Hereinafter, exemplary embodiments of the present disclosure will now be described in detail with reference to the accompanying drawings.

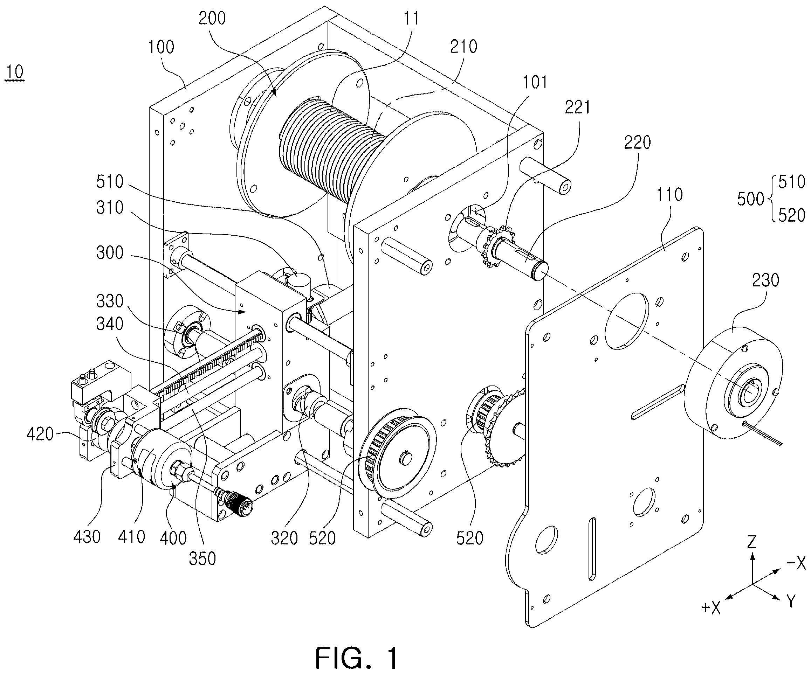

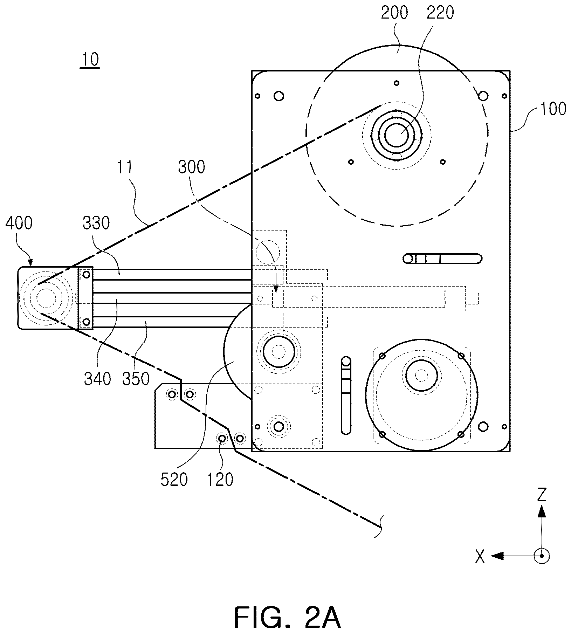

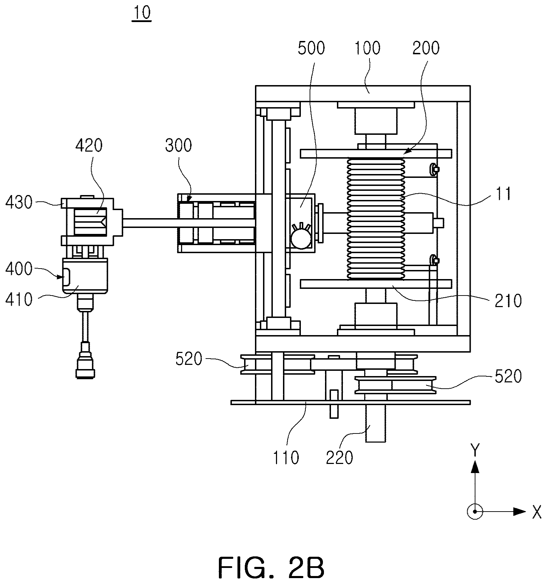

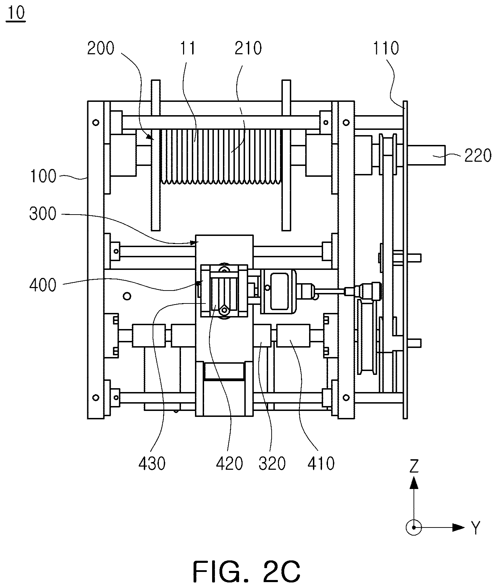

FIG. 1 is a perspective view of a wire transfer device according to an exemplary embodiment; FIG. 2A is a side view of the wire transfer device according to an exemplary embodiment; FIG. 2B is a top view of the wire transfer device according to an exemplary embodiment; and FIG. 2C is a front view of the wire transfer device according to an exemplary embodiment.

Referring to FIGS. 1, 2A, 2B, and/or 2C, a wire transfer device 10 may include a frame 100, a bobbin 200, a tension adjustment unit 300, an encoder module 400, and a driving device 500.

The wire transfer device 10 may move a wire 11. For example, the wire transfer device 10 may transfer the wire which may be connected to foil used in manufacturing a battery.

According to an exemplary embodiment, the frame 100 may accommodate at least some of components of the wire transfer device 10. For example, the bobbin 200, the tension adjustment unit 300, the encoder module 400, and the driving device 500 may be connected directly or indirectly to the frame 100. According to an exemplary embodiment, some (e.g., guide roller 600) of the components of the wire transfer device 10 may be disposed outside the frame 100.

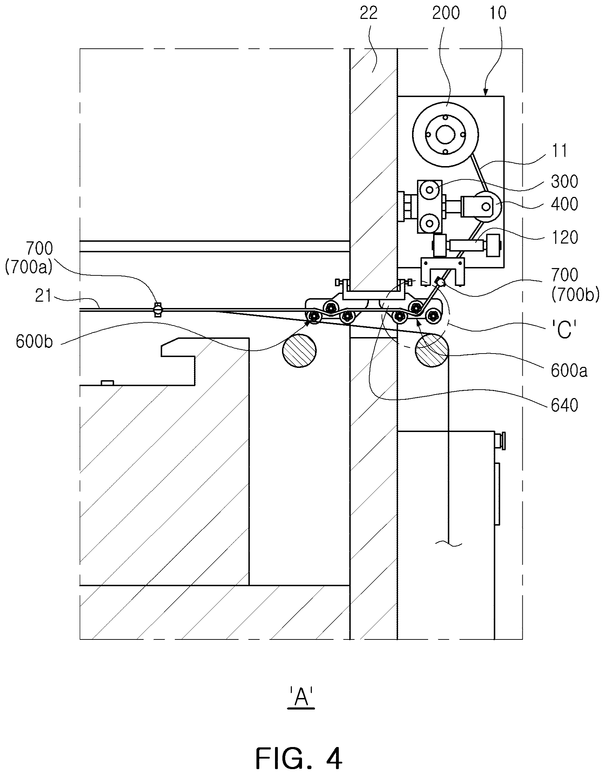

According to an exemplary embodiment, the frame 100 may connect or fix the wire transfer device 10 to a foil transfer device (e.g., foil transfer device 20 in FIG. 4). For example, the frame 100 may be mounted on the foil transfer device by using a coupling component (e.g., screw, magnet, or rivet). According to an exemplary embodiment, a structure of the frame 100 may be an example and selectively designed.

According to an exemplary embodiment, the frame 100 may include a chain drive frame 110 accommodating at least a portion of the driving device 500. The chain drive frame 110 may support at least one pulley 520 of the driving device 500. At least a portion of at least one pulley 520 may be covered by the frame 100.

The bobbin 200 may accommodate the wire 11. For example, the wire 11 may be wound on the bobbin 200. In an exemplary embodiment, the bobbin 200 may be referred to as a roll or a wire roll.

The bobbin 200 may include an accommodation region 210 where the wire 11 is configured to be wound and a bobbin drive shaft 220 extending from the accommodation region 210. The bobbin drive shaft 220 may be rotatably connected to the frame 100. The bobbin drive shaft 220 may include a connection part 221 connected to a chain. According to an exemplary embodiment, the frame 100 may include a through-hole 101 for accommodating the bobbin drive shaft 220 of the bobbin 200.

According to an exemplary embodiment, the wire transfer device 10 may include a brake 230 connected to the bobbin drive shaft 220. The brake 230 may prevent the wire 11 from being loosened by preventing rotation of the bobbin 200 when power to a motor 510 is cut off. In an exemplary embodiment, the brake 230 may be a powder brake.

In an exemplary embodiment, the wire transfer device 10 may include a bearing structure (not shown) for reducing friction occurring between the bobbin drive shaft 220 and the frame 100.

According to an exemplary embodiment, the wire transfer device 10 may include the tension adjustment unit 300. The tension adjustment unit 300 may stop an operation of the wire transfer device 10 when momentary tension occurs in the wire 11 while the wire 11 is being transferred.

According to an exemplary embodiment, the tension adjustment unit 300 may include a tension adjustment device 310 and a tension adjustment rack 330 which are connected to the frame 100. The tension adjustment rack 330 may be moved by a tension of the wire 11. For example, the tension adjustment rack 330 may be moved in a first direction (e.g., -X direction) when the tension of a specified magnitude or more is delivered to the wire 11. The tension adjustment device 310 may stop the movement of the wire transfer device 10 when the tension adjustment rack 330 is moved to a specified length or more. For example, a rotation speed of the bobbin 200 may be detected or determined based on a length by which the tension adjustment rack 330 is moved in the first direction. The tension adjustment device 310 may stop the movement of the wire transfer device 10 when the rotation speed of the bobbin 200 that is detected by the tension adjustment device 310 is a set rotation speed or more.

According to an exemplary embodiment, the tension adjustment unit 300 may include a screw structure 320. The screw structure 320 may move the tension adjustment device 310. For example, the screw structure 320 may move the tension adjustment device 310 in a second direction (e.g., Y-axis direction) perpendicular to the first direction. A location of the wire 11 wound around the bobbin 200 may be changed as the screw structure 320 is moved in the second direction. For example, the wire 11 may be wound substantially uniformly around the bobbin 200 based on the movement of the screw structure 320. According to an exemplary embodiment, at least a portion of the wire 11 may be moved after passing the screw structure 320. In an exemplary embodiment, the screw structure 320 may be a reverse screw.

According to an exemplary embodiment, the tension adjustment unit 300 may include a gas lift 340. According to an exemplary embodiment, the gas lift 340 may provide the tension to the wire 11. For example, the gas lift 340 may change the tension of the wire 11 by protruding from the frame 100 and/or the tension adjustment device 310 by using a hydraulic pressure.

According to an exemplary embodiment, the tension adjustment unit 300 may include a linear shaft 350 protruding from the frame 100 and/or the tension adjustment device 310. The linear shaft 350 may support at least a portion of the encoder module 400.

According to an exemplary embodiment, the tension adjustment device 310 may adjust the tension of the wire 11 by changing protruding lengths of the gas lift 340 and the linear shaft 350.

According to an exemplary embodiment, the wire transfer device 10 may include the encoder module 400 for detecting a transfer amount of the wire 11. For example, the encoder module 400 may include an encoder bracket 430 connected to the linear shaft 350, an encoder roller 420 guiding the movement of the wire 11, and an encoder 410 detecting the rotation speed and/or rotation direction of the encoder roller 420. The encoder 410 and/or the encoder roller 420 may be connected to the encoder bracket 430.

According to an exemplary embodiment, the wire transfer device 10 may include the driving device 500.

In an exemplary embodiment, the driving device 500 may include the motor 510 providing driving force. The motor 510 may be disposed on the frame 100. The motor 510 may supply the driving force for rotating the bobbin 200.

For example, the driving device 500 may include at least one pulley 520 rotatably connected to the frame 100, and the chain connected to at least one pulley 520 and the bobbin 200. At least a portion of the driving force generated by the motor 510 may be delivered to the bobbin 200 through at least one pulley 520 and the chain. According to an exemplary embodiment, the chainmay be connected to the drive shaft 220 of the bobbin 200. For example, the drive shaft 220 may include the connection part 221 accommodating the chain. At least portions of at least one pulley 520 and the chain may be covered by the chain drive frame 110.

According to an exemplary embodiment, the wire transfer device 10 may include a communications module (not shown) and/or a processor (not shown) for driving the motor 510. The communications module may receive a signal delivered in a wireless or wired manner from an external electronic device or server located outside the wire transfer device 10. The processor may generate a signal for operating the motor 510 based on the signal received by the communications module.

According to an exemplary embodiment, the wire transfer device 10 may include a limit sensor (not shown). The limit sensor may detect a component (e.g., wire 11 or holder 700) of the wire transfer device 10 that is disposed at a specified point. The motor 510 may be operated based on information detected by the limit sensor. For example, the motor 510 may be stopped when the wire 11 or the holder 700 is disposed at the specified point. According to an exemplary embodiment, the limit sensor may be replaced by a proximity sensor.

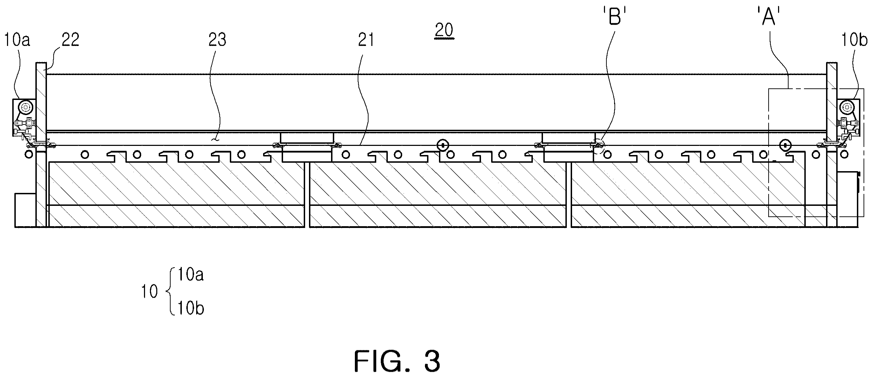

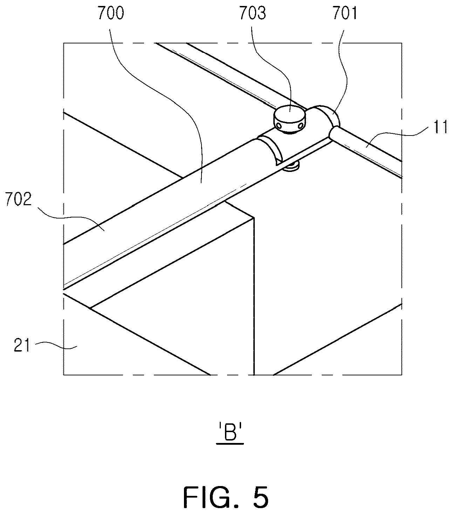

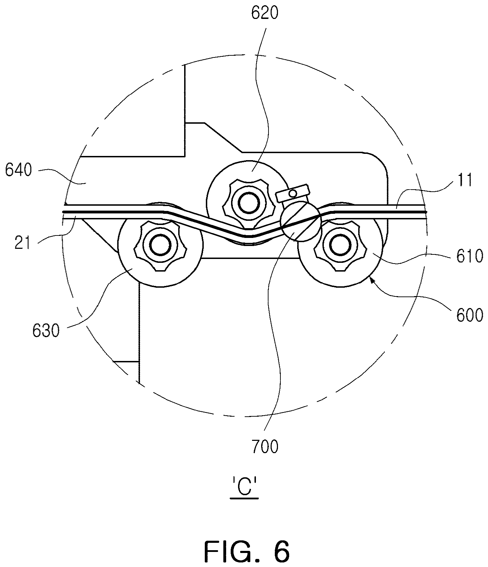

FIG. 3 is a view of the wire transfer device mounted on the foil transfer device according to an exemplary embodiment; FIG. 4 is an enlarged view of region A of FIG. 3 according to an exemplary embodiment; FIG. 5 is an enlarged view of region B of FIG. 3 according to an exemplary embodiment; and FIG. 6 is an enlarged view of region C of FIG. 4 according to an exemplary embodiment.

Referring to FIGS. 3, 4, 5 and/or 6, the wire transfer device 10 may be used to align foil 21 of the foil transfer device 20. Descriptions of the components (e.g., frame 100, bobbin 200, tension adjustment unit 300, encoder module 400, and driving device 500) of the wire transfer device 10 shown in FIGS. 1, 2A, 2B and/or 2C may also be applied to those of the wire transfer device 10 shown in FIGS. 3 and 4.

The wire transfer device 10 may be mounted on the foil transfer device 20. The foil transfer device 20 may include a roll (not shown) for transferring the foil 21 and a structure 22 supporting the roll. The frame 100 of the wire transfer device 10 may be mounted on the structure 22. In an exemplary embodiment, the foil transfer device 20 may be a manufacturing device used to coat the foil 21.

According to an exemplary embodiment, the plurality of wire transfer devices 10 may be provided. For example, the wire transfer device 10 may include a first wire transfer device 10a disposed on one side (e.g., the left side) of the foil transfer device 20 and a second wire transfer device 10b disposed on the other side (e.g., the right side) of the foil transfer device 20. A location of the foil 21 may be aligned as the first wire transfer device 10a and the second wire transfer device 10b pull both ends of the foil 21. For example, the wire transfer device 10 may move the foil 21 disposed in an empty space 23 to a path for manufacturing the battery when the foil 21 is moved in the empty space 23 between the structures 22 of the foil transfer device 20.

According to an exemplary embodiment, the wire transfer device 10 may include at least one guide member 120. The guide member 120 may include a roller. For example, the guide member 120 may guide the path of the wire 11 withdrawn from the wire transfer device 10. The wire 11 wound on the bobbin 200 may be delivered to the guide roller 600 after passing at least one guide member 120. According to an exemplary embodiment, the guide member 120 may be disposed on the frame 100.

The wire transfer device 10 may include the guide roller 600. The guide roller 600 may guide the movement of the wire 11 and/or the holder 700. For example, the guide roller 600 may be in contact with the wire 11 and/or the holder 700. The wire 11 and/or the holder 700 may be moved to the bobbin 200 along a path provided by the guide roller 600. According to an exemplary embodiment, the guide roller 600 may be referred to as a bearing.

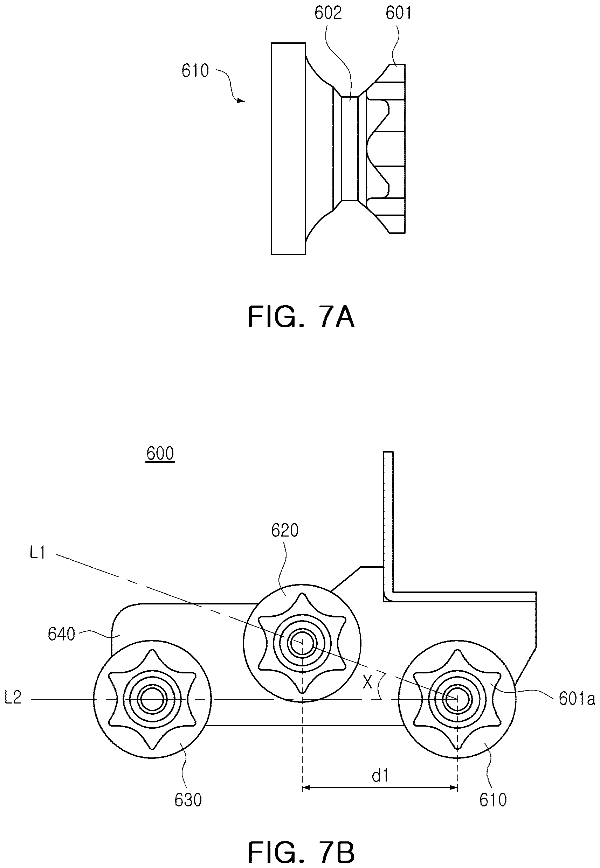

According to an exemplary embodiment, the guide roller 600 may include a plurality of guide rollers 610, 620, and 630. For example, the guide roller 600 may include the first guide roller 610, the second guide roller 620, and the third guide roller 630 spaced apart from one another. The tension delivered to the foil 21 may be changed based on the shape and/or placement of the guide roller 600. The description below describes the shape and/or placement of the guide roller 600 in detail with respect to FIGS. 7A through 9B.

According to an exemplary embodiment, the guide roller 600 may be manufactured using a heat-resistant material. According to an exemplary embodiment, the wire transfer device 10 may be used in a high temperature environment. The wire transfer device 10 may be manufactured using a material which may be used without lubricant to prevent hardening of the lubricant. For example, the guide roller 600 may be formed of a ceramic.

According to an exemplary embodiment, the guide roller 600 may be spaced apart from the frame 100 of the wire transfer device 10. For example, the guide roller 600 may be mounted on the structure 22 of the foil transfer device 20 by using a support member 640 spaced apart from the frame 100.

According to an exemplary embodiment, at least one guide roller 600 may be provided for one wire transfer device 10. For example, the guide roller 600 may include a first roller module 600a disposed outside the structure 22 of the foil transfer device 20 and a second roller module 600b disposed in the structure 22.

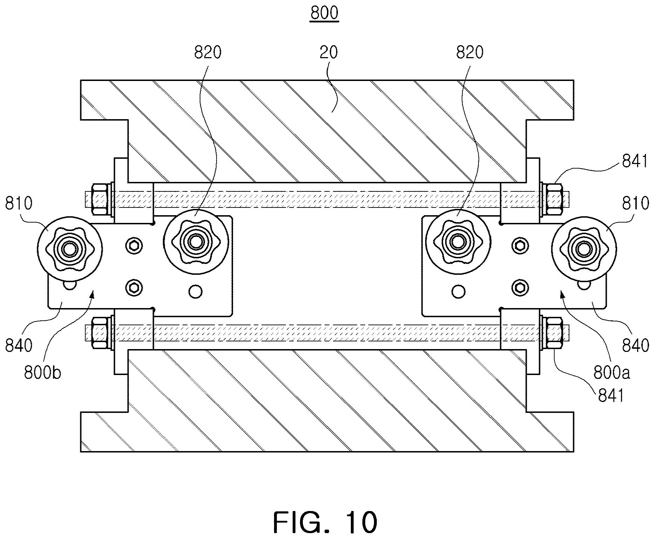

FIG. 4 shows that each of the first roller module 600a and the second roller module 600b includes three guide rollers, and a structure of the guide roller 600 is not limited to thereto. For example, in an exemplary embodiment (e.g., shown in FIG. 10), each of a first roller module 800a and a second roller module 800b may include two guide rollers. In another exemplary embodiment that is not shown, the first roller module 600a may include three guide rollers, and the second roller module 600b may include two guide rollers.

The wire transfer device 10 may include the holder 700 connecting the wire 11 and the foil 21 to each other. According to an exemplary embodiment, the holder 700 may include a first end 701 connected to the wire 11 and a second end 702 connected to the foil 21. For example, the first end 701 may be connected to the wire 11 by using a coupling component 703 (e.g., pin, rivet, or bolt). The second end 702 may be attached to the foil 21 by using an adhesive member (e.g., tape) that is not shown. In an exemplary embodiment, the holder 700 may be referred to as a foil fixation unit.

The wire 11 may be wound around the bobbin 200 by the wire transfer device 10. The holder 700 and the foil 21 may be moved to the wire transfer device 10. Referring to FIG. 4, the holder 700 may be moved from a holder 700a at a first point to a holder 700b at a second point after passing the guide roller 600. The wire 11 and the foil 21 moved by the holder 700 may be moved back to its location for manufacturing the battery (e.g., its location for coating battery electrodes).

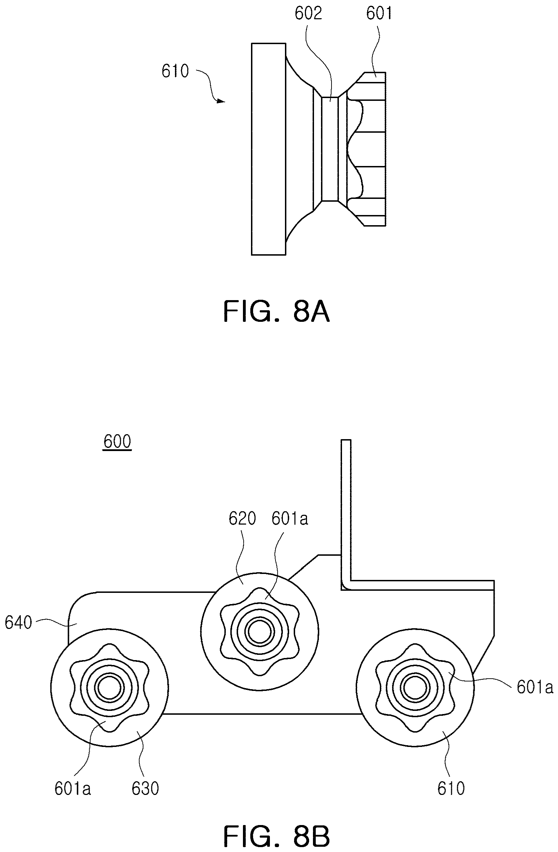

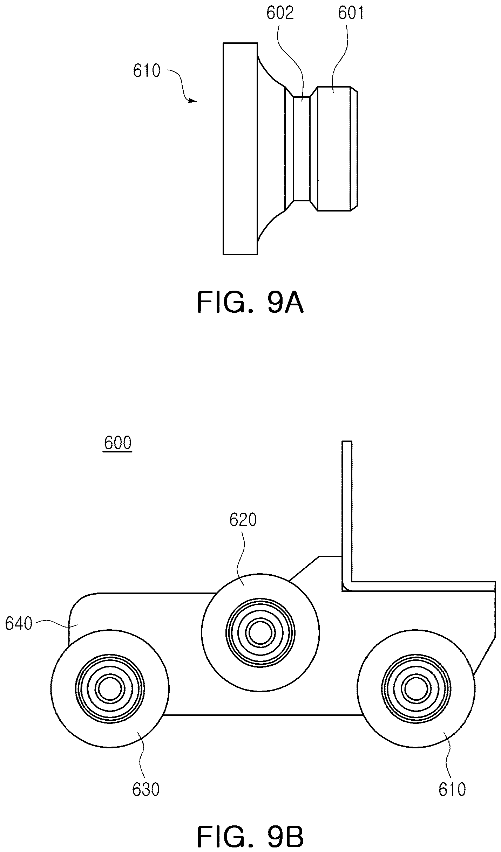

FIGS. 7A and 7B are views of the guide roller according to an exemplary embodiment; FIGS. 8A and 8B are views of the guide roller according to another exemplary embodiment; and FIGS. 9A and 9B are views of the guide roller according to another exemplary embodiment. Each of FIGS. 7A, 8A, and 9A is a side view of a part (e.g., first guide roller 610) of the guide roller 600.

Referring to FIGS. 7A, 7B, 8A, 8B, 9A and/or 9B, the guide roller 600 may be designed in various shapes. The description of the guide roller 600 shown in FIGS. 4 and 6 may also be applied to that of the guide roller 600 shown in FIGS. 7A, 7B, 8A, 8B, 9A, and/or 9B.

The guide roller 600 may provide the movement path of the wire 11 or the holder 700. For example, the guide roller 600 may include a protruding region 601 for providing the movement path of the holder 700 and a groove region 602 extending from the protruding region 601 to accommodate the wire 11. For example, the holder 700 may be moved while being in contact with the protruding region 601.

A shape of the protruding region 601 may be selectively designed. Referring to FIGS. 7A, 7B, 8A, and 8B, the protruding region 601 may include a plurality of protrusions 601a in contact with the holder 700. The plurality of protrusions 601a may be spaced apart from each other. The plurality of protrusions 601a may each include a curved surface surrounding at least a portion (e.g., side surface) of the holder 700.

The curvature and/or shape of the protrusion 601a may be selectively designed to adjust the tension(s) of the wire 11 and/or the foil 21. The protrusion 601a may surround at least a portion of the holder 700. According to an exemplary embodiment (e.g., shown in FIGS. 7A and 7B), the guide roller 600 may include the protrusion 601a protruding substantially in a star shape. According to an exemplary embodiment (e.g., shown in FIGS. 8A and 8B), the guide roller 600 may include the protrusion 601a protruding substantially in a flower shape. According to an exemplary embodiment (e.g., shown in FIGS. 9A and 9B), the guide roller 600 may include the protruding region 601 protruding substantially in a circular shape. The shape of the protrusion 601a shown in FIGS. 7A through 9B may be selectively designed. For example, the shape of the protrusion 601a may be changed as long as the structure is to adjust the tension(s) of the wire 11 and/or the foil 21.

The groove region 602 may have a slit or recess shape to accommodate the wire 11. For example, the wire 11 may be moved while being inserted into the groove region 602.

According to an exemplary embodiment, the guide rollers 600 may be arranged to have an angle for adjusting the tension(s) of the wire 11 and/or the foil 21. For example, the first guide roller 610, the second guide roller 620, and the third guide roller 630 may be arranged to have a specified angle with respect to one another. In an exemplary embodiment, the first guide roller 610, the second guide roller 620, and the third guide roller 630 may have substantially the same shape.

According to an exemplary embodiment, a specified angle X between a first virtual line L1 and a second virtual line L2 may be set to a range for adjusting the tension(s) of the wire 11 and/or the foil 21, the first virtual line L1 passing through the center of the first guide roller 610 and the center of the second guide roller 620, and the second virtual line L2 passing through the center (e.g., rotation axis) of the first guide roller 610 and the center of the third guide roller 630. The second virtual line L2 may be inclined at the specified angle X with respect to the first virtual line L1. According to an exemplary embodiment, the specified angle X may be about 20 to 25 degrees. The tension(s) of the wire 11 and/or the foil 21 may be set to a desired range by forming the specified angle X to be 20 to 25 degrees. For example, breakage of the wire 11 and/or the foil 21 may be prevented. In an exemplary embodiment, the specified angle X may be 21 to 23 degrees.

According to an exemplary embodiment, the tension(s) of the wire 11 and/or the foil 21 may be increased as the specified angle X is increased. When the specified angle X is less than 20 degrees, the tension(s) of the wire 11 and the foil 21 may be increased, thus making it difficult to adjust the location (s) of the wire 11 and/or the foil 21. When the specified angle X is more than 25 degrees, the wire 11 and/or the foil 21 may be deviated from the path(s).

According to an exemplary embodiment, the guide rollers 600 may be arranged while having a distance for adjusting the tension(s) of the wire 11 and/or the foil 21. For example, a first distance d1 between the center of the first guide roller 610 and the center of the second guide roller 620 may be set to a range for adjusting the tension (s) of the wire 11 and/or the foil 21. According to an exemplary embodiment, the first distance d1 may be set to 40 mm to 50 mm. The tension(s) of the wire 11 and/or the foil 21 may be set to the desirable range by setting the first distance d1 to 40 mm to 50 mm. For example, the breakage of the wire 11 and/or the foil 21 may be prevented.

The angle and distance of the guide rollers 600 described with reference to FIG. 7B may also be applied to the guide roller 600 shown in FIG. 8B or 9B.

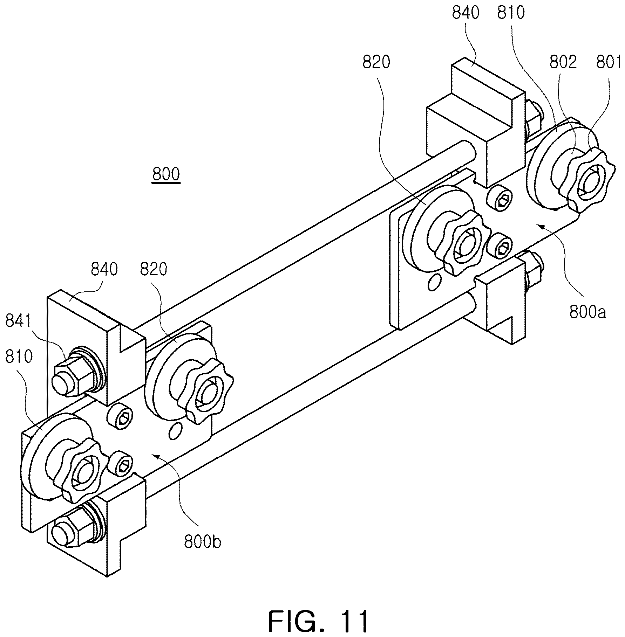

FIG. 10 is a front view of the guide roller mounted on the foil transfer device according to an exemplary embodiment; and FIG. 11 is a perspective view of the guide roller mounted on the foil transfer device according to an exemplary embodiment.

Referring to FIG(S). 10 and/or 11, a guide roller 800 may be mounted on the foil transfer device 20. At least a portion of the description of the guide roller 600 described with reference to FIGS. 4, 6, and 7A to 9B may also be applied to that of the guide roller 800 shown in FIG(S). 10 and/or 11. For example, the descriptions of the first guide roller 610, the second guide roller 620, and the support member 640 shown in FIG. 6 or 7B may also be applied to those of a first guide roller 810, a second guide roller 820, and a support member 840.

According to an exemplary embodiment, the number of rollers included in the guide roller 800 may be selectively designed. For example, the guide roller 800 may include a first roller module 800a and a second roller module 800b, each including two guide rollers.

The roller module 800a or 800b may include the first guide roller 810 and the second guide roller 820 spaced apart from the first guide roller 810. The first roller module 800a may be symmetric to the second roller module 800b.

Each of the first guide roller 810 and the second guide roller 820 may include a protruding region 801 for guiding the path of the holder (e.g., holder 700 shown in FIG. 5) and a groove region 802 for guiding the path of the wire 11.

The guide roller 800 may include a support member 840 coupling the first guide roller 810 and the second guide roller 820 to the foil transfer device 20. The support member 840 may include at least one fastening part 841. The fastening part 841 may include a bolt or a nut.

The content described above is only an example to which a principle of the present disclosure is applied, and may further include another configuration within the scope of the present disclosure.

As set forth above, according to an exemplary embodiment of the present disclosure, the breakage of the foil may be prevented by providing the foil with the tension in the specified range.

According to an exemplary embodiment of the present disclosure, the work convenience may be increased and the safety accident may be prevented.

While the exemplary embodiments have been shown and described above, it will be apparent to those skilled in the art that modifications and variations could be made without departing from the scope of the present disclosure as defined by the appended claims.

## Claims

1. A wire transfer device comprising:
a frame;
a bobbin connected to the frame and on which a wire is configured to be wound;
a holder including a first end connected to the wire and a second end opposite to the first end and configured to be connected to foil; and
a guide roller configured to guide a movement path of the wire or the holder,
wherein the guide roller includes a groove region for accommodating the wire and a protruding region extending from the groove region and configured to contact with the holder.

2. The device of claim 1, wherein the protruding region includes a plurality of protrusions respectively having a curved surface surrounding at least a portion of the holder.

3. The device of claims 1 or 2, wherein the guide roller includes a first guide roller, a second guide roller, and a third guide roller spaced apart from one another, and
a second virtual line passing through a center of the first guide roller and a center of the third guide roller is inclined at a specified angle with respect to a first virtual line passing through the center of the first guide roller and a center of the second guide roller.

4. The device of claim 3, wherein the specified angle is 20 to 25 degrees.

5. The device of any one of preceding claims, further comprising a driving device including a motor configured to supply driving force for rotating the bobbin.

6. The device of claim 5, wherein the driving device includes at least one pulley configured to rotate by the driving force generated by the motor, and a chain connected to the at least one pulley and the bobbin, and
the frame includes a chain drive frame supporting the at least one pulley.

7. The device of any of claims 5 or 6, further comprising a limit sensor configured to detect a movement of the wire,
wherein the motor is configured to operate based on information detected by the limit sensor.

8. The device of any one of preceding claims, further comprising a tension adjustment unit configured to adjust tension of the wire,
wherein the tension adjustment unit includes
a tension adjustment rack configured to move by the tension of the wire in a first direction,
a tension adjustment device configured to prevent the movement of the tension adjustment rack in the first direction, and
a gas lift for increasing the tension of the wire.

9. The device of claim 8, further comprising an encoder module including
an encoder bracket connected to a linear shaft of the tension adjustment unit,
an encoder roller connected to the encoder bracket and configured to guide a movement of the wire, and
an encoder configrued to detect a rotation speed of the encoder roller.

10. The device of any of claims 8 or 9, wherein the tension adjustment unit is connected to the frame, and the tension adjustment unit includes a screw structure for moving the tension adjustment device in a second direction perpendicular to the first direction.

11. The device of any one of preceding claims, wherein the bobbin includes
an accommodation region for accommodating the wire, and
a bobbin drive shaft extending from the accommodation region and rotatably connected to the frame.

12. The device of claim 11, further comprising a brake connected to the bobbin drive shaft.

13. The device of any one of preceding claims, wherein the frame and the guide roller are configured to be mounted on a foil transfer device while being spaced apart from each other.

14. The device of any one of preceding claims, wherein the guide roller includes a ceramic.

15. The device of any one of preceding claims, wherein the guide roller includes
a first roller module disposed outside a structure of the foil transfer device and
a second roller module disposed inside the structure of the foil transfer device.
